# EUROPEAN PATENT APPLICATION

(11) **EP 1 011 062 A1**
(43) Date of publication of application: **21.06.2000**
(21) Application number: 98870274.2
(22) Date of filing: 18.12.1998
(51) Int. Cl.: G06K 7/10, H04L 27/30

(54) **Method for coding and/or decoding alphanumerical information using an optical signal and reading device**

(71) Applicant: S.C. NDR Management S.r.l., Constanza (RO)
(72) Inventor: De Vadder, Paul Alfons Dominique, Vaduz (LI); De Bock, Guido Prosper Richienne, 2440 Geel (BE); Allaert, Hendrik Marie Marcel Eduard, 9100 Sint-Niklaas (BE)
(74) Representative: Van Straaten, Joop

(57) **Abstract**

Coding and/or decoding alphanumerical information using an optical signal usable in or for computing, is done using an optical signal which comprises at least four optical subsignals having differing frequency characteristics. The subsignals represent the numbers one, two, three or four respectively and numbers higher than four are represented by two or more substantially simultaneous subsignals of different frequencies, the relevant number being equal to the sum of the numbers represented by the individual subsignals.

## Description

The invention relates to a method for coding and/or decoding alphanumerical information using an optical signal.

The invention furthermore relates to a reading device for an optical signal.

Methods for coding and/or decoding alphanumerical information using optical signals are known. Often use is made of indicia such as bar-codes. Also optical signals are used for communication purposes.

Decoding and/or coding by direct optical signals or by indirect optical signals has been known for a long time, beginning with perforated carting, then with optical sensing and, finally, with a lot of optical codes - bar codes in different symbols some being more adapted to a particular situation than others.

The known methods, however, have a number of short-comings.

In known optical codes which are based on binary codes, compression of data is needed for the reduction of all the zero's existing in a binary code. Even thought these methods are widely used, they necessitate a lot of memory space and processing.

There is, however, ever more need to increase the speed of conversion and manipulation of data and to decrease the amount of memory of systems in which data is manipulated. The more memory is needed, the longer in general the time needed for manipulation is.

An objective of this invention is to permit a directly optical sum or subtraction or any other numerical relation in an optical manner. A further objective is to simplify some elementary arithmetical operations without soliciting unnecessarily the memories of a computer in a routine operation. A further objective is to give a full indication for the identification of some products so that these could be read easier and more accurately. Finally, a last objective is to increase speed in the numerical treatments between a reading device and a central computer and to reduce the difficulty of access.

To this end the method in accordance with the invention is characterized in that the optical signal comprises at least four optical subsignals having differing frequency characteristics, said subsignals representing the numbers one, two, three or four respectively and numbers higher than four being represented by two or more subsignals of different frequencies, the relevant number being equal to the sum of the numbers represented by the individual subsignals.

The method is accordance with the invention utilizes four optical subsignals, each having differing frequency characteristics. Within the concept of the invention this is to be understood a distinguishable difference in the frequency characteristics of the optical subsignals. For simplicity 'different frequency' is hereafter sometimes also called 'of different colour', although the 'colour' may be outside the visible range. Each number from 0 to 9 is represented by a different optical subsignal or a combination of different optical subsignals. Because each of the optical subsignals represent a number 1 to 4 and combination of the optical subsignals makes number 5 to 9 the alphanumerical number can be read directly by means of a reading device having four reading devices for each of the optical subsignals, and it is not necessary to convert the optical signal to a digital form. Parasite noises and the necessity for large scale production were the reasons for the choice of binary systems. For certain applications, in particular where a large processing speed is needed and/or the amount of memory is limited the invention is useful.

Preferably a signal comprising all subsignals represents the number 0.

In a preferred embodiment the information is transferred in sequential optical signals each representing a number from 0 to 9. This enables decimal numbers larges than 10 to be represented in a compressed form.

A reading device for use in the method in accordance with the invention for converting an optical signal in an electrical signal comprises for each of the optical subsignals an optical reader sensitive to the optical subsignals to convert the information in the optical subsignal in an electrical subsignal the value of which is proportional to the value represented by the optical subsignal.

Each of the optical subsignals are read by a reader, for instance a photo-diode or photo-transistor sensitive to the optical subsignal. The information of the optical code generates an electrical signal. The value of this electrical signal is proportional to the value represented by the optical subsignal. This enables direct and simple manipulation of the signals and more in particular direct translation of sums of optical subsignals (and other arithmetic manipulation) into electrical signals.

Preferably the electrical signals are coupled to a memory, said memory comprising a capacitor, said capacitor being coupled in parallel to each of the readers for the optical subsignals, the value of the signal directed from a reader to the capacitor being equivalent with the value represented by the optical subsignal.

The amount of charge accumulated on the capacitor is then a direct measure for the alphanumerical number represented in the optical signal.

Preferably a fifth optical subsignal is used, the fifth subsignal used if additional information (such as letters) are to be encoded.

This enables to send data regarding manipulation of numbers or other information (such as codes designating the following number to represent a letter) in a form which is distinguishable from a pure number.

The invention is of particular importance in applications in which speed of processing and (lack of) available memory are of importance. The invention enables the speed of processing to be increased considerably (for instance sevenfold) and allows the use of reduced memories, which is of importance in applications like: storage, robots, mechatronic devices.

These and further aspects of the invention will be further explained and illustrated by means of the figures in which a preferred embodiment of the device is schematically shown.
Figure 1 shows schematically an optical diode.
Figure 2 shows schematically an optical transistor.
Figure 3A shows schematically a reading device comprising four readers.
Figure 3B shows schematically a code in accordance with the invention.
Figures 4, 5 and 6 show further more advanced embodiments of codes in accordance with the invention.
Figure 7 schematically illustrates discharging the memories
Figure 8 schematically illustrates charging of lines.
Figure 9A to 9D schematically illustrate some manipulation of data.
Figure 10 shows how using a laser a signal is generated.

The figures are schematic.

Some dielectric layers of transistors can be used to act as an optical wave guide. Adding impurities like calcium oxides the detection of the existence of a light signal in the optical wave guide by semi-conductive devices is possible combining capacitive and resistive effect in the optical command of the semi conducting layers. So the regulation of a good and uniform diode effect is possible by combining semi-conducting in which impurities, sensible to light are present.

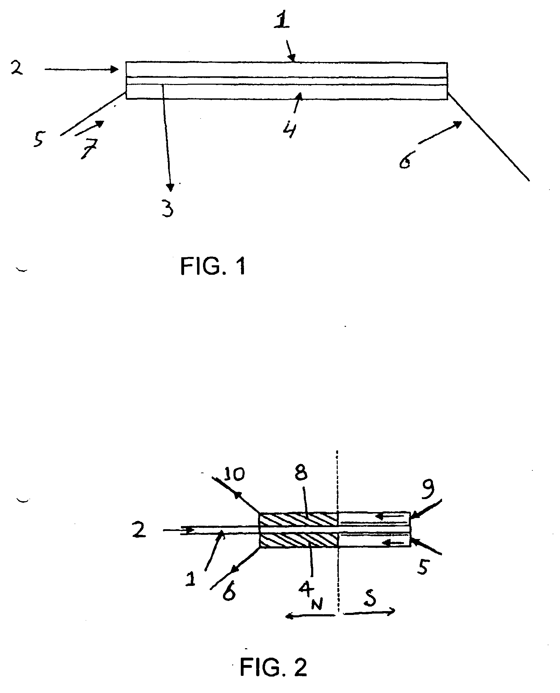

Figure 1 shows schematically an optical diode. Light signal 2 is brought into optical wave guide 1 Semi-conductor layer 4 comprises a layer 3 with light sensitive impurities such as CaO. Upon presence of light in the wave guide 1, the resistance of the semi-conductor layer will be strongly reduced and a current 7 flows through the leads 5 and 6.

Figure 2 shows schematically an optical transistor. An optical wave guide 1 in which light, (preferably laser light) can be coupled is sandwiched between two semi-conducting transistors 4 and 8, each of which has a part (S) comprising light sensitive impurities, one of the layers having impurities which supply, upon excitation of light, positive current carriers, the other layers having impurities which supply negative current carriers and a part (N) without such impurities. In this manner two transistors (a pnp and a npn) are formed which are triggered by the presence (or not) of light in the light guide 1. It is remarked that the use of two transistors per optical guide line has the advantage that two signals are generated when light is present in the guide line. This has the advantage that the functioning of the reading device can easily be checked.

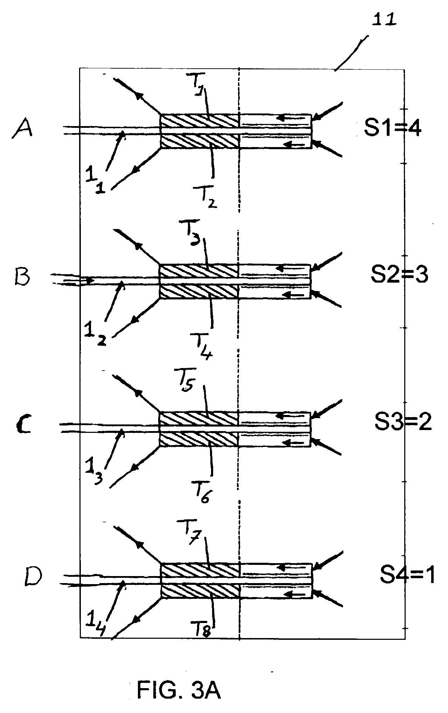

Figure 3A shows schematically a reading device having four optical guide lines 1₁ to 1₄, to each of which two transistors T₁ to T₈ are coupled in the same manner as in figure 2. To each of the optical guides a subsignal A, B, C and D may be supplied. Supplying such signals can be done by a a device having four lasers. Alternatively subsignals can be generated by lamps before which cards having different color filters pass. The signals can also be generated by semiconducting lasing devices based on bipolar junction transistors (BJT) as for instance disclosed in Japanese patent application JP 1-270035 or hetero transverse junction bipolar transistors (HTJ). Such devices are also called BJT or HTJ lasers. The transistors T₁, T₂ etc. are sensitive to said subsignals. When the subsignals are generated by BJT or HTJ lasers the reading devices may advantageously comprise corresponding BJT or HTJ transistors for detecting the subsignal. In its simplest form the optical code in accordance with the invention comprises four subsignals in different frequencies. By combining these subsignals electrical signals are made. In this examplary embodiment a subsignal on optical guide D provides an electrical subsignal S₄ with an arbitrary value of 1, a subsignal on optical guide C provides an electrical signal with a value S₃ of 2 etc. These electrical signals can be manipulated either in the reading device itself or in a computing device to which the subsignals are sent or partially in the reading device and partially in a computing device.

Below forms and aspects of the codes and reading, registration, memorizing and processing sequences useful in devices according to the invention are illustrated.

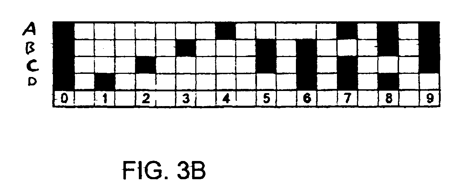

The codes in accordance with the invention comprise four or more optical subsignals. These code arrangements may be symbolized in the form of a decimal symbolized pictogram. Figure 3B shows such symbols. The four different signals A to D are indicated in the vertical direction, thus the subsignals having different frequency will be in the y-axis and the amplitude or excitation of the light are indicated by black areas (signal) or white areas (no signal). The corresponding electrical signal (0 to 10) is given in the bottom line. The reading device comprises four optical transitors forming four readers, who each will read a different frequency, and they will determine the value of the signal received by measuring the sub-signals. The sequences of the signals will always include a no sensitive column (white or no signal received) which doesn't represents zero but is used as a permanent control of errors of the readers.

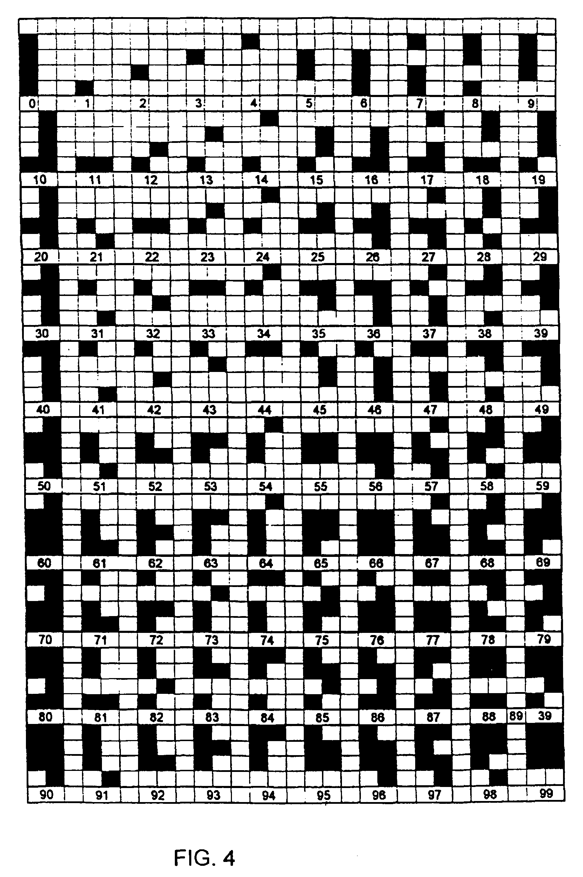

In its most simple form, as represented in figure 3B, the code is represented by a one line code, in the y-axis divided in four areas, each representing on the one hand a subsignal and on the other hand a value for the electrical signal from one to four. So optical subsignal A stands for an electrical signal with value 4, subsignal B for three, subsignal C for two and subsignal D for one. All values of 1 to 9 are represented in one column. Each value from one to four is represented by a single subsignal. Five is represented by two subsignals representing the value of the sum of two plus three. So simultanoeus receival of subsignal on optical guide C and B represent the value 5. 'Simultaneous' is to be understood that the reading device recognizes the two subsignals as to belong to one value. Seven is expressed by three subsignals, representing one plus two plus four. Eight is expressed by three subsignals, representing four plus three plus one. Nine represents four plus three plus two. Finally the zero value is symbolized as one column with full excitation, i.e. all four subsignals. For more clarity we have illustrated in figure 3B the values of zero to nine, where each number corresponds to its own symbol in its respective column. When a second column is used (i.e. a subsequent signal), this represents that a decimal value is added. The column of the left represents the value of multiples of ten, while the column of the right represents unitary values. In figure 4 values from 10 to 99 and their symbol in two columns are represented.

Using the same logic as explained in relation to figure 3B in every column a value from zero to nine and from right to left column per column a value multiplied by ten is given. When a white column is used it means the limit of the symbolized number.

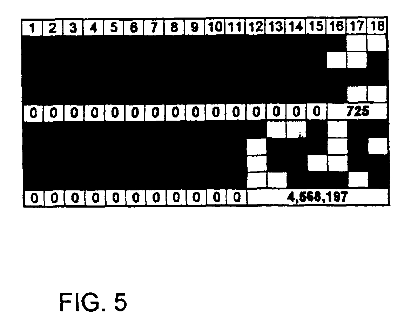

Below it will be explained how optically and symbolically the different operations or relations that relate to a series of different numbers in order to make an equivalent value are represented. In Figure 5 an example of a number of three decimals (from one hundred to nine hundred ninety nine) and an example of a symbol with a value of more then one million is schematically shown. The columns who are not used before the number symbolise zeros, the used columns are a transcription of what was described before.

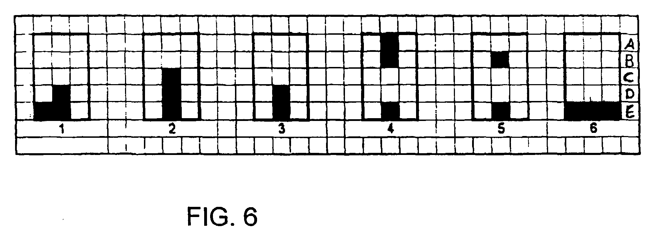

Letter values (A, B etc.) may be transcribed like in an alpha-numerical code using a classic binary combination and preceding the code with a code of five subsignals (and not four). A fifth optical guide 2₅ would have to be added in the schematic representation of figures 3A and 3B. Other codes may also be encoded in similar fashion. Examples of such encoding schemes are depicted in Figure 6. In Figure 6, "1" is the code for the alphanumeric, "2" is the addition process, "3" the subtraction, "4" the multiplication, "5" the division and "6" is the start signal.

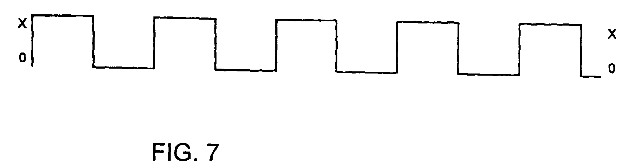

In the figures 3B to 6 the symbols form a schematic representation of signals to a reading device having calibrated opto-diodes or opto-transistors using a layer 2 (see figures 1 and 2) as optical guide and the given impurities on the superficies of this. The memory comprises capacitors with all the same capacitance, but with variable charges. A characteristic of this type of memories is the discharge mode comprising sequential discharges of units forming electrical signals of the type as in Figure 7.

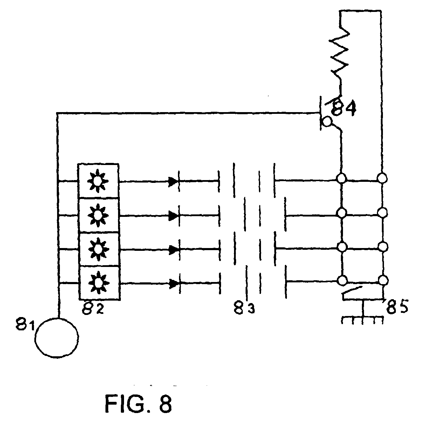

In Figure 8 a simplified scheme of what happens when the four lines of one column are charged is shown. In 81 the electrical line goes through an opto-diode 82 in the capacitors 83. The voltage of a transistory connection is high enough by a voltage of four lines to permit the switching of the whole column of capacitors to the negative and so to discharge the column.

Now every column has a layer value of ten times the value of the preceeding column. So through a special opto-electronic device as explained in point 1 that functions like an opto-diode, the laser light permits the entrance of the current by a correct trigling of the laser head. This trigling always begins and finishes on the same place but the movement is also constant and given by a start signal, like in the symbols of the processor of addition, subtraction, etc.. Three consecutive empty columns give the end of the operation.

The exitation of the 5^{th} line connects a disposition of sequential memorisation just like in classic computing. This can be done in several ways:
- one is the classical binary interpretation as in a classic computer;
- another is to pre-process with a very special program in a decimal modus and to regulate transductors for example with the obtained values to or to sub-systems;
- to pilote a transductor in accordance with a basic command and a general program in a central computer (parametric).

The decimal system processing is an opto-switching just like described above in point 3.

After the arrangements of the memories, the processing of the stored memories in decimal mode will be:
- parallel junction of the memories and transfer of the equivalent in case of addition or substraction (in this last case the substraction will be a "white" information of the no exitated lines, directly used as substractor after being preceded by the order of substraction;
- the multiplicators and dividers would be repetitive effects of juxtapositions in memories, so much time as is the value of the multiplicator or divider.

These orders in case of decimal storage need special memory capacitors of the same type as in point 3 with an arrangement that is included in a classic ordonation by the special optic signal.

Below some examples of manipulation of data are given.

As explained above the values of data are expressed in four sub-signals, the fifth subsignal may be used to indicate other information such as operational paramaters (addition, multiplication etc. see Figure 6). Each optical guide 2 is preferably coupled to two transistors, one negative, the other positive, who react to the frequency of the subsignal. Consequently a value is in fact recorded twice, once in a pnp and once in a npn transistor. A signal consist of five sub-signals, each signal is therefore in the preferred embodiment stored twice, once as a positive value and once as a negative value. The sum of these two should always be zero. This may be utilized as a control for the receipt of the signal and the functioning of the reading device. Examples of usefull operational parameters are indicated in figure 6.

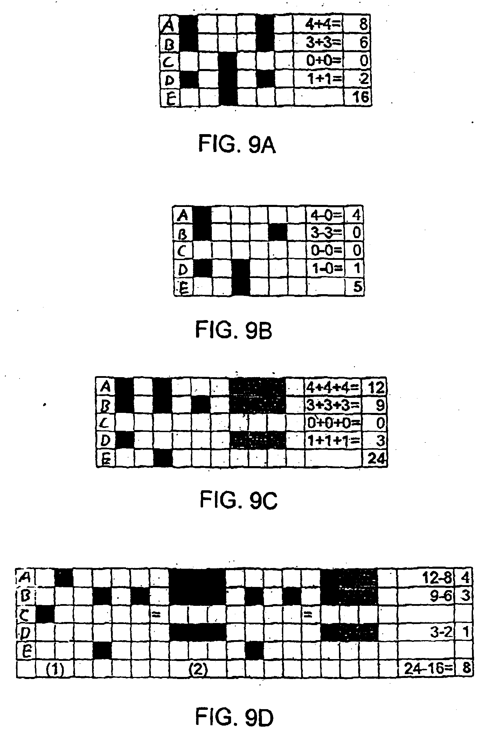

The principle for a sum is indicated in figure 9A.
When the reading device or a computing device receives the instruction for an addition 8+8 it will copy the value 8 in another memory, value for value and add 8. In that new memory will then be stored, in electrical values, the sum of both values.

Substraction (see figure 9B) works on the same principle, but with reducing values.

For a multiplication (8*3), the reading device or the computing device (such as an ALU, arithmetic Logic Unit) will copy the value 8 three times in a memeory and then add up the values subsignal by subsignal (see Figure 9C).

Division (see figure 9D) is the inverse operation, for example 24:8; first the normal notation of 24 as in (1), will be converted in (2) then the operation will be completed.

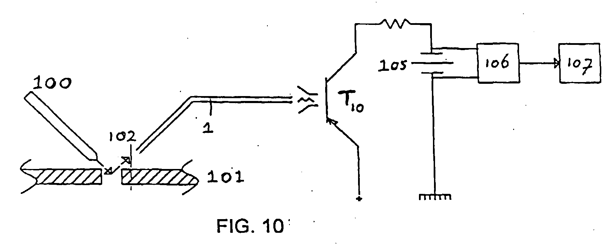

Figure 10 shows schematically a laser 100. The laser emits light which is shone on a carrier which carries a code. This will effect (depending on the code on the carrier a signal 102 which is transported to light guide 1, coupled to opto-transistor (BJT) T₁₀. The signal will be stored in capacitive memory 105 coupled to the BJT transistor. A reader 106 for reading the memory 105 will transfer the values to a CPU (central processing Unit) 107.

It will be clear that within the framework of the invention many variations are possible and the invention is not to be restricted to the exemplary embodiments given above.

## Claims

1. Method for coding and/or decoding alphanumerical information using an optical signal usable in or for computing, characterized in that the optical signal comprises at least four optical subsignals having differing frequency characteristics, said subsignals representing the numbers one, two, three or four respectively and numbers higher than four being represented by two or more substantially simultaneous subsignals of different frequencies, the relevant number being equal to the sum of the numbers represented by the individual subsignals.

2. Method as claimed in claim 1, characterized in that a signal comprising all subsignals represents the number 0.

3. Method as claimed in claim 1 or 2, characterized in that the information is transferred in sequential optical signals each representing a number from 0 to 9.

4. Method as claimed in any of the preceding claims characterized in that the signal comprises a fifth sub-signal.

5. Reading device for use in a method as claimed in any of the preceding claims, characterized in that the device comprises for each of the optical subsignals an optical reader sensitive to the optical subsignals to convert the information in the optical subsignal in an electrical subsignal the value of which is proportional to the value represented by the optical subsignal.

6. Device as claimed in claim 5, characterized in that the device comprises a memory, said memory comprising a capacitor, said capacitor being coupled in parallel to each of the readers for the optical subsignals.

7. Device as claimed in claim 5, characterized in that each subsignal is recorded twice, once in a positive value and once in a negative value.

8. Device as claimed in claim 7, characterized in that the reading device comprises a number of optical guides for each of the subsignals, each of the optical guides being coupled to a npn and a pnp opto-transistor.
